# EUROPEAN PATENT APPLICATION

(11) **EP 2 439 720 A2**
(43) Date of publication of application: **11.04.2012**
(21) Application number: 11182990.9
(22) Date of filing: 27.09.2011
(51) Int. Cl.: G09F 3/10

(54) **Adhesive label and method of producing the same**

(30) Priority: 05.10.2010 JP 2010225943
(71) Applicant: Seiko Instruments Inc., Chiba-shi, Chiba (JP)
(72) Inventor: Sanbongi, Norimitsu, Chiba-shi, Chiba (JP); Tani, Kazuo, Chiba-shi,, Chiba (JP); Sato, Yoshinori, Chiba-shi,, Chiba (JP)
(74) Representative: Cloughley, Peter Andrew

(57) **Abstract**

An adhesive label (1) includes: a support (2); an adhesive agent layer (5) which is made of an adhesive agent, and formed on one surface of the support (2); a non-adhesive heat-reactive layer (7) which is positioned above the adhesive agent layer (5), the non-adhesive heat-reactive layer (7) including an opening formed when heated at a predetermined temperature or higher; and a non-adhesive layer (6) which is positioned between the non-adhesive heat-reactive layer (7) and the adhesive agent layer (5), and is movable over the adhesive agent layer (5).

## Description

The present invention relates to an adhesive label and a method of producing the same.

Adhesive labels having adhesiveness are widely used for display of bar codes for point-of-sale (POS) of goods such as food, tags for delivery, or display of contents of bottles, cans, etc. The adhesive label generally has the following configuration. That is, an adhesive agent layer that is made of a pressure-sensitive adhesive agent and comes into contact with an article at a time of use; release paper (separator) to be peeled at the time of use are laminated successively on one surface of a sheet-shaped support; and a thermosensitive recording layer whose color changes upon being heated and on which characters and the like are to be recorded, an image-receiving layer on which recording is conducted with ink from an ink-jet recording device, or the like are laminated on the other surface of the support.

At the time of use of the adhesive label, a user peels the release paper and attaches the adhesive label to an article. Therefore, it is necessary to peel the release paper, which degrades the efficiency of the operation. Further, the release paper is coated with a release agent such as silicon, and hence the peeled release paper is disposed of without being recycled as recycled paper or the like, which is waste of resources.

In order to solve the above-mentioned problems, an adhesive label not using release paper has been proposed. For example, there is an adhesive label using a thermosensitive adhesive agent layer that uses a thermosensitive adhesive agent which is non-adhesive at room temperature but exhibits adhesiveness upon being heated, in place of the adhesive agent layer made of a thermosensitive adhesive agent (for example, Japanese Patent Application Laid-open No. 2000-103969). Specifically, a thermosensitive adhesive agent of a composition containing a synthetic resin, a solid plasticizer, and a tackifier is used. At a time of heating, the solid plasticizer is melted to swell or soften the synthetic resin, and in addition, high adhesiveness is exhibited due to the use of the tackifier.

However, the solid plasticizer of the thermosensitive adhesive agent is mainly a crystalline compound having a melting point of about 60°C to about 80°C such as dicyclohexylphthalate. In an environment in which ambient temperature rises as in summer, the ambient temperature rises to the vicinity of the melting point of the solid plasticizer depending upon the storage state of the adhesive label, and there is a possibility that the thermosensitive adhesive agent layer may exhibit adhesiveness. In general, the adhesive label is stored in a state of being wound into a roll shape or housed in an adhesive label production apparatus. Therefore, if the thermosensitive adhesive agent layer exhibits adhesiveness in the state in which the adhesive label is wound into a roll shape, there is a possibility that a blocking phenomenon may occur in which the thermosensitive adhesive agent layer and the thermosensitive recording layer adhere to each other. If the melting point of the solid plasticizer is increased so as to prevent the blocking phenomenon, it is necessary to apply large heat energy to the thermosensitive adhesive agent layer so as to allow the thermosensitive adhesive agent layer to exhibit adhesiveness.

Further, in order to allow the thermosensitive adhesive agent layer to exhibit adhesiveness, the thermosensitive adhesive agent layer is heated by bringing heating means of the adhesive label production apparatus, such as a thermal head, into contact with the thermosensitive adhesive agent layer. During heating or after heating of the thermosensitive adhesive agent layer, a part of the thermosensitive adhesive agent layer having exhibited adhesiveness may adhere to the thermal head or a platen roller supporting the adhesive label as paste dirt. In the case where the paste dirt adheres to the thermal head, the heat of the thermal head becomes unlikely to be transmitted to the thermosensitive adhesive agent layer, and when the paste dirt adheres to the platen roller or a label transport path in the apparatus, the transportation of the adhesive label is hindered.

Therefore, there has been devised an adhesive label not using a thermosensitive adhesive agent and not requiring release paper or the like which may result in waste.

For example, there is an adhesive label in which a thin non-adhesive layer made of silicon or the like is provided on a thermosensitive recording layer (for example, Japanese Utility Model Application Laid-open No. Sho 59-46265). Unlike the release paper, the non-adhesive layer of the adhesive label does not cover the adhesive agent layer, and is provided as a film on the thermosensitive recording layer formed on an opposite surface of the adhesive agent layer. Therefore, the non-adhesive layer is not disposed of at a time of use. Further, even when the adhesive label provided with the non-adhesive layer is wound into a roll shape, the adhesive agent layer and the non-adhesive layer made of silicon or the like of the adhesive label come into contact with each other. Thus, the blocking phenomenon in which the adhesive agent layer and the non-adhesive layer adhere to each other can be prevented.

Besides, there is an adhesive label in which a heat-reactive layer that is a resin film layer is provided on an adhesive agent layer (for example, Japanese Patent Application Laid-open No. 2006-078733). The heat-reactive layer covers the adhesive agent layer at room temperature, and hence the adhesive strength of the adhesive agent layer not exposed to outside does not function. Even when the adhesive label is wound into a roll shape, the adhesive agent layer and the heat-reactive layer made of a resin film or the like of the adhesive label come into contact with each other. Therefore, the blocking phenomenon is prevented. When the heat-reactive layer is heated, the heat-reactive layer is melted, and holes are opened in the heat-reactive layer, for example, due to the thermal contraction. Then, the adhesive agent layer is exposed to outside through the holes, and thus, the adhesive strength can be exhibited.

However, in the case of the adhesive label provided with a non-adhesive layer according to an example of the prior art, the adhesive label is being transported in the adhesive label production apparatus with the adhesive agent layer peeled from the non-adhesive layer to be exposed. Therefore, there is a possibility that a part of the adhesive agent layer of the adhesive label adheres to the inside of the transport path to cause paper jam or transport failure. Further, if the adhesive labels discharged from the adhesive label production apparatus are to be attached in an overlapped manner, the adhesive agent layer of one adhesive label is attached to the non-adhesive layer of the other adhesive label, and hence, the adhesive labels cannot be attached because the one adhesive label does not adhere to the other adhesive label.

In the case of the adhesive label in which the heat-reactive layer is provided on the adhesive agent layer according to another example of the prior art, the heat-reactive layer is heated with heating means, for example, a thermal head. In the thermal head, the center of a heating region reaches a peak of the heating temperature, and the heating temperature is lower at ends of the heating region. Therefore, the heat-reactive layer undergoes thermal contraction from the center of the heating region in which the heating temperature is high to the periphery, and a crack as an opening is formed at the center of the heating region. Then, the thermal contraction of the heat-reactive layer proceeds from the opening to the periphery, and the opening is enlarged. However, in the vicinity of the ends of the heating region, the heating temperature is lower than that of the vicinity of the center, and hence, the thermal contraction is unlikely to proceed in the vicinity of the ends of the heating region. Further, due to the adhesive strength of the adhesive agent layer with respect to the heat-reactive layer, the thermal contraction of the heat-reactive layer is hindered in the vicinity of the interface between the adhesive agent layer and the heat-reactive layer. Therefore, an opening with an expected size is not formed as compared to the heating region of the thermal head, and the exposure of the adhesive agent layer from the opening of the heat-reactive layer becomes small, resulting in insufficient adhesiveness of the adhesive label.

Thus, in view of the above-mentioned problems, an object of the present invention is to provide an adhesive label capable of exhibiting sufficient adhesiveness easily at a time when the adhesive label is used, while keeping non-adhesiveness at a time when the adhesive label is not used, and to provide a method of producing the adhesive label.

An adhesive label according to the present invention includes: a support; an adhesive agent layer which is made of an adhesive agent, and formed on one surface of the support; and a non-adhesive heat-reactive layer which is positioned above the adhesive agent layer, the non-adhesive heat-reactive layer including an opening formed when heated at a predetermined temperature or higher. Further, the adhesive label includes a non-adhesive layer which is positioned between the non-adhesive heat-reactive layer and the adhesive agent layer, and is movable over the adhesive agent layer.

According to the present invention, because the surface of the adhesive label is covered with the non-adhesive heat-reactive layer in an environment at room temperature in an unheated state, the adhesive labels do not adhere to each other during storage or transportation. Further, release paper or the like is not necessary, which is preferred in view of the protection of environment, and a production cost can also be reduced. In addition, a desired adhesive region and adhesive strength with satisfactory energy efficiency for exhibiting adhesiveness can be realized easily.

Embodiments of the present invention will now be described by way of further example only and with reference to the accompanying drawings, in which:
FIG 1 is a schematic structural view of an adhesive label according to Embodiment 1 of the present invention;
FIG 2A is a top view of the adhesive label, illustrating an example of a shape and arrangement of cells of a non-adhesive layer in which the cells of the non-adhesive layer have a square shape;
FIG 2B is a top view of the adhesive label, illustrating an example of a shape and arrangement of the cells of the non-adhesive layer in which the cells of the non-adhesive layer have a circular shape;
FIG 2C is a top view of the adhesive label, illustrating an example of a shape and arrangement of the cells of the non-adhesive layer in which the cells of the non-adhesive layer have a diamond shape;
FIG 2D is a top view of the adhesive label, illustrating an example of a shape and arrangement of the cells of the non-adhesive layer in which the cells of the non-adhesive layer have a hexagonal shape;
FIG 3 is a schematic structural view of an example of an apparatus for producing an adhesive label of the present invention;
FIG 4A is a schematic view illustrating a state of a change in the adhesive label of the present invention immediately after being heated with a thermal head;
FIG 4B is a schematic view illustrating a state of a change in the adhesive label of the present invention when a heat-reactive layer undergoes thermal contraction;
FIG 4C is a schematic view illustrating a state of a change in the adhesive label of the present invention when the heat-reactive layer and the non-adhesive layer undergo thermal contraction;
FIG 4D is a schematic view illustrating a state of a change in the adhesive label of the present invention when a hole is formed;
FIG 5 is a schematic view illustrating a state in which a part of the adhesive label is heated;
FIG 6A is a schematic view illustrating a state of a heat-reactive layer immediately after being heated with a thermal head, in an adhesive label of the prior art;
FIG 6B is a schematic view illustrating a state of the heat-reactive layer when the heat-reactive layer starts undergoing thermal contraction, in the adhesive label of the prior art;
FIG 6C is a schematic view illustrating a state of the heat-reactive layer when a hole is formed in the heat-reactive layer, in the adhesive label of the prior art;
FIG 6D is a schematic view illustrating a state of the heat-reactive layer after being heated with the thermal head, in the adhesive label of the prior art; and
FIG 7 is a schematic structural view of an adhesive label according to Embodiment 2 of the present invention.

Hereinafter, the present invention is described by way of embodiments with reference to the accompanying drawings. Components having like functions are denoted with like reference numerals in the accompanying drawings, and the descriptions thereof may be omitted.

### [Embodiment 1]

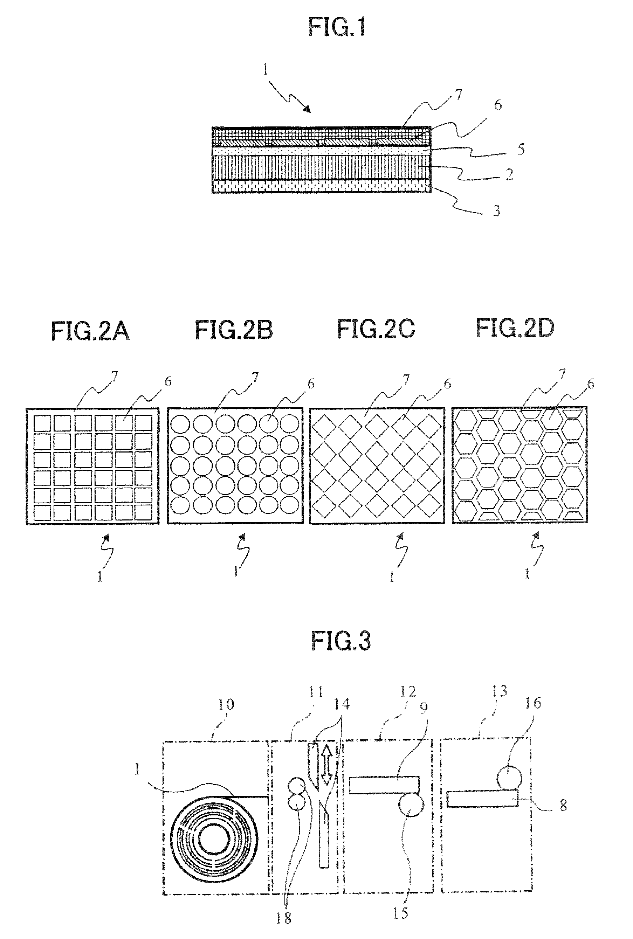

FIG 1 is a schematic structural view of an adhesive label according to Embodiment 1 of the present invention.

An adhesive label 1 has the following configuration. That is, an adhesive agent layer 5 made of a pressure-sensitive adhesive agent, a non-adhesive layer 6, and a non-adhesive heat-reactive layer (resin film layer) 7 made of an olefin-based resin are laminated in the stated order on one surface of a sheet-shaped support 2 made of paper or the like, and a thermosensitive recording layer 3 on which characters, bar codes, and the like are to be recorded is laminated on the other surface of the support 2. An image-receiving layer or the like on which recording is conducted with ink from an ink-jet recording device may be used in place of the thermosensitive recording layer 3, and any layer on which recording is conducted may be used.

The non-adhesive layer 6 is not provided uniformly over the entire adhesive label 1, but is disposed on the adhesive agent layer 5 in such a manner that a plurality of cells independent of each other are placed in a matrix or zigzag manner. Examples of the shape of the cells of the non-adhesive layer 6 include, but are not limited to, a square (see FIG 2A), a circle (see FIG 2B), a diamond (see FIG 2C), or a hexagon (see FIG 2D).

By forming the non-adhesive layer 6 of a material with a low friction coefficient, such as a silicon resin or a fluorine resin, the cohesion between the non-adhesive layer 6 and the adhesive agent layer 5, and the cohesion between the non-adhesive layer 6 and the heat-reactive layer 7 are set to be small, respectively. It should be noted that it is important that the cohesion between the non-adhesive layer 6 and the adhesive agent layer 5 be small, and the cohesion between the non-adhesive layer 6 and the heat-reactive layer 7 may be small or large. The cohesion as used herein collectively refers to properties caused by a friction force and a physical or chemical adhesive force other than the friction force.

In a non-use state (unheated state) as illustrated in FIG 1, the adhesive label 1 cannot exhibit adhesiveness because the adhesive agent layer 5 is covered with the non-adhesive layer 6 and the heat-reactive layer 7. Therefore, even when the adhesive label 1 is stored while being wound into a roll shape, a blocking phenomenon can be prevented. Further, because the adhesive label 1 is kept in a non-adhesive state in the unheated state, the adhesive label 1 does not adhere to various members in an apparatus for producing an adhesive label, and thus, transportability (paper-running property) is satisfactory.

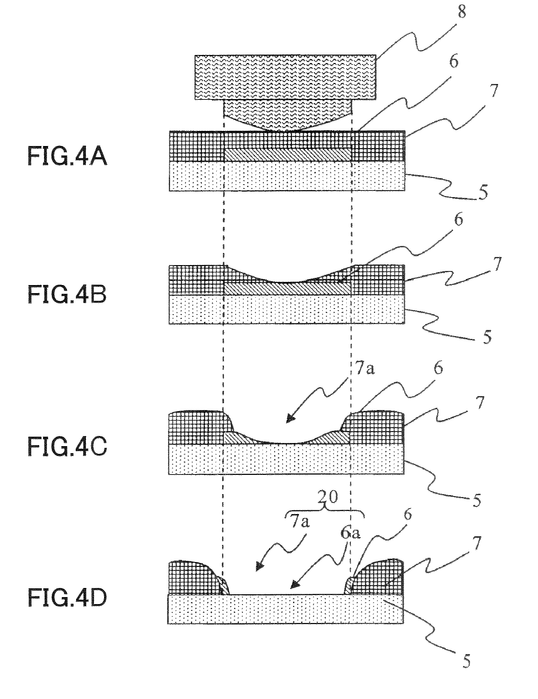

During the use of the adhesive label 1, the heat-reactive layer 7 and the non-adhesive layer 6 are heated using heating means such as a thermal head 8 (see FIG 3). An opening 7a (see FIGS. 4C and 4D) is formed by thermal contraction occurring in the heat-reactive layer 7 with heat of the thermal head 8. Thus, the lower non-adhesive layer 6 is exposed to outside through the opening 7a of the heat-reactive layer 7. Further, the non-adhesive layer 6 also undergoes thermal contraction with heat of the thermal head 8 and an opening 6a (see FIG 4D) is formed, to thereby form a hole portion 20 (see FIG 4D). The lower adhesive agent layer 5 is exposed to outside, and thus, the adhesive label 1 can exhibit adhesiveness. The adhesive agent layer 5 with a heat capacity larger than those of the heat-reactive layer 7 and the non-adhesive layer 6 is not opened by heating, which has no influence on the adhesiveness. The adhesive label 1 that is heat-treated as described above can be attached to various articles (adherend).

The thermosensitive recording layer 3 of the adhesive label 1 is heated by the thermal head 8 that is used for heating the heat-reactive layer 7 and the non-adhesive layer 6 or another thermal head 9 (see FIG 3) of the same type as that of the thermal head that is used for heating the heat-reactive layer 7, irrespective of whether the heating is conducted before or after the heating of the heat-reactive layer 7. Thus, desired characters, marks, patterns, etc. are recorded.

FIG 3 illustrates an apparatus for producing the adhesive label 1. The apparatus for producing the adhesive label includes a roll storage part 10, a cutting part 11, a recording part 12, and an opening formation part 13. The roll storage part 10 holds the adhesive label 1 wound into a roll shape. Then, the adhesive label 1 unreeled from the roll storage part 10 is transported by transport rollers 18 provided in the cutting part 11 to reach the cutting position of cutter members 14. The adhesive label 1 temporarily stopped at the cutting position of the cutter members 14 is cut to have a desired length by the cutter members 14. The cut adhesive label 1 is sent to the recording part 12. In the recording part 12, an arbitrary position of the adhesive label 1 is heated with the thermal head 9 positioned on an upper side of a platen roller 15 while being transported by the platen roller 15. The thermosensitive recording layer 3 develops color at the position heated with the thermal head 9, and thus, desired characters, marks, patterns, and the like are recorded. Then, the adhesive label 1 is sent to the opening formation part 13. It should be noted that a downstream section of a label may be processed by the recording part 12 and the opening formation part 13 before an upstream section is cut by the cutting part 11.

In the opening formation part 13, the adhesive label 1 transported in the state in which recording is conducted on the thermosensitive recording layer 3 is heated at an arbitrary position thereof with the thermal head 8 positioned on a lower side of a platen roller 16 while being transported by the platen roller 16. At the position heated with the thermal head 8, the openings 7a and 6a are formed respectively in the heat-reactive layer 7 and the non-adhesive layer 6, and thus, the hole portion 20 (see FIG 4D) is formed.

The state in which the adhesive label 1 is heated in the case where the cohesion between the heat-reactive layer 7 and the non-adhesive layer 6 is small is described specifically with reference to FIGS. 4A to 4D. In FIGS. 4A to 4D, the support 2 and the thermosensitive recording layer 3 are omitted, and in FIGS. 4B to 4D, the thermal head 8 is omitted.

As illustrated in FIGS. 4A and 4B, a portion 7a of the heat-reactive layer 7 that is in contact with the thermal head 8 is heated to start undergoing thermal contraction gradually. At this time, some heat is also transmitted to the lower non-adhesive layer 6. Because the cohesion between the heat-reactive layer 7 and the non-adhesive layer 6 is small, the thermal contraction of the resin film is not hindered by the non-adhesive layer 6, and as illustrated in FIG 4C, the opening 7a is formed in the heat-reactive layer 7. Further, heat is further transmitted to the non-adhesive layer 6, and hence, the non-adhesive layer 6 also undergoes thermal contraction. Because the cohesion between the non-adhesive layer 6 and the adhesive agent layer 5 is small, the thermal contraction of the non-adhesive layer 6 is not hindered by the adhesive agent layer 5, and as illustrated in FIG 4D, the opening 6a is also formed in the non-adhesive layer 6. The openings 7a and 6a form the hole portion 20, and the adhesive agent layer 5 is exposed through the hole portion 20. The adhesive agent layer 5 is not deformed (an opening is not formed) due to a large heat capacity thereof. The adhesive label 1 thus formed is pressed against an adherend such as a package of food, and thus, the adhesive agent layer 5 exposed through the hole portion 20 adheres to the adherend.

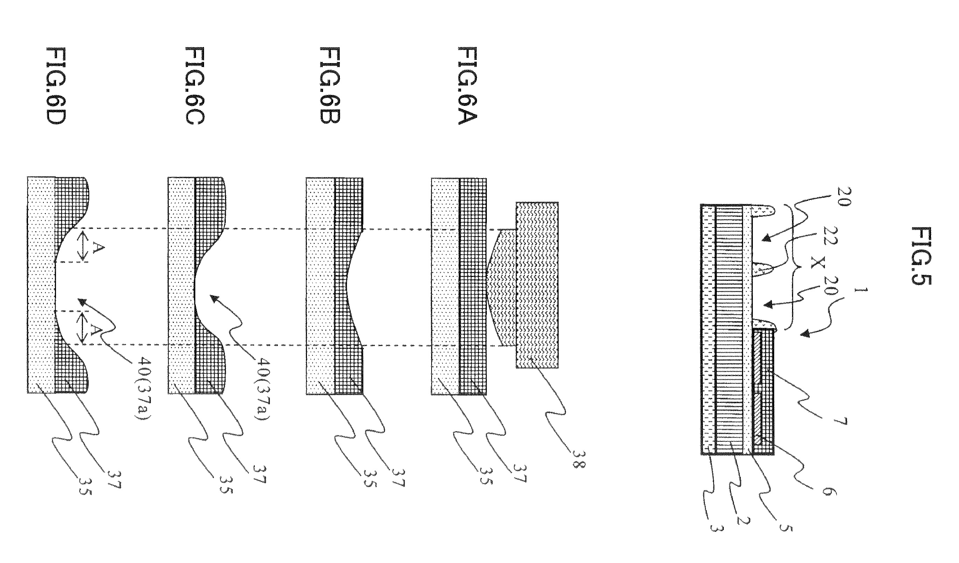

FIG 5 illustrates a state in which a part of the adhesive label 1 is heated. A range of X in the figure denotes a heating region.

When the adhesive label 1 is heated, the hole portion 20 is formed as described above. The heat-reactive layer 7 and the adhesive agent layer 5 are in direct contact with each other between the cells of the non-adhesive layer 6 arranged in a matrix or zigzag manner, and hence, the thermal contraction of the heat-reactive layer 7 is hindered by the adhesive agent layer 5. As a result, a residue 22 of the heat-reactive layer 7 and the non-adhesive layer 6 having undergone thermal contraction is accumulated in these portions. The residue 22 is protruded on the adhesive agent layer 5 to adhere thereto, which can prevent the thermal head 8 from coming into direct contact with the adhesive agent layer 5, and thereby prevent the adhesive agent of the adhesive agent layer 5 from adhering to the thermal head 8. Further, the residue 22 adheres to the adhesive agent layer 5, and hence, the residue 22 can be prevented from adhering to the inside of the transport path for the adhesive label 1 in the apparatus for producing an adhesive label and to the thermal head 8. Consequently, the thermal head 8 can heat the adhesive label 1 stably, and paper jam in the transport path of the apparatus for producing an adhesive label can also be prevented.

The above description is directed to the case where the cohesion between the heat-reactive layer 7 and the non-adhesive layer 6 is small. If the cohesion between the heat-reactive layer 7 and the non-adhesive layer 6 is set to be large, when the heat-reactive layer 7 undergoes thermal contraction, the non-adhesive layer 6 is pulled by the heat-reactive layer 7 to be torn, and the opening 6a is formed in the non-adhesive layer 6. In this case, because the cohesion between the non-adhesive layer 6 and the adhesive agent layer 5 is small similarly to the above-mentioned example, the opening 6a can be formed in the non-adhesive layer 6 pulled by the heat-reactive layer 7 without being hindered by the adhesive agent layer 5.

It is preferred that the thickness of the non-adhesive layer 6 be about 1 µm to about 10 µm. Further, it is preferred that the area of one cell of the non-adhesive layer 6 in a matrix or zigzag manner be about 1 mm² to about 100 mm². Further, it is preferred that the total area of the non-adhesive layer 6 be about 50% (in the case of low adhesiveness) to about 95% (in the case of high adhesiveness) with respect to the surface area of the adhesive label 1.

Next, in this embodiment, the technical significance of the non-adhesive layer 6 provided between the adhesive agent layer 5 and the heat-reactive layer 7 is described.

First, how the applicant of the present application has achieved the present invention is described. FIGS. 6A to 6D illustrate a state in which a heat-reactive layer of an adhesive label of the prior art (Japanese Patent Application Laid-open No. 2006-078733) is opened. In FIGS. 6A to 6D, a support and a thermosensitive recording layer of an adhesive label 1 are omitted, and in FIGS. 6B to 6D, a thermal head 38 is omitted.

As described above, in the prior art (Japanese Patent Application Laid-open No. 2006-078733), it is difficult to form a hole with a desired size and shape in a heat-reactive layer 37 with good precision. The applicant of the present application considered one of the reasons as follows. Because the heat-reactive layer 37 is laminated on an adhesive agent layer 35 having high adhesiveness, the heat-reactive layer 37 is attached to be fixed to the adhesive agent layer 35. That is, as illustrated in FIG 6A, when the heat-reactive layer 37 is heated with the thermal head 38, the heat-reactive layer 37 undergoes thermal contraction as illustrate in FIG 6B. Then, as illustrated in FIG 6C, a hole 40 is formed in the heat-reactive layer 37, and the adhesive agent layer 35 is exposed through the hole 40. However, as illustrated in FIG 6D, in the vicinity of the interface between the heat-reactive layer 37 and the adhesive agent layer 35, even when the heat-reactive layer 37 is to undergo thermal contraction by being heated, the heat-reactive layer 37 remains without being separated from the adhesive agent layer 35 (ranges of A in FIG 6D) because the heat-reactive layer 37 adheres to the lower adhesive agent layer 35. Thus, an opening 37a that is the hole 40 to be formed in the heat-reactive layer 37 becomes smaller than the region heated with the thermal head 38. Further, the size of the opening 37a is influenced by the adhesive strength of the adhesive agent layer 35, which makes it difficult to keep the size of the opening 37a uniform. As a result, there is a variation in adhesiveness of the adhesive label 1.

Therefore, in this embodiment, the non-adhesive layer 6 is provided between the heat-reactive layer 7 and the adhesive agent layer 5. The non-adhesive layer 6 has such a low friction coefficient that the cohesion between the non-adhesive layer 6 and the adhesive agent layer 5 becomes small. However, as described above, the cohesion between the heat-reactive layer 7 and the non-adhesive layer 6 may be large or small. Thus, in the case where the cohesion between the heat-reactive layer 7 and the non-adhesive layer 6 is small, when the heat-reactive layer 7 undergoes thermal contraction, the heat-reactive layer 7 moves as if the heat-reactive layer 7 slid over the non-adhesive layer 6, and the non-adhesive layer 6 undergoes thermal contraction without being hindered by the adhesive strength of the adhesive agent layer 5. Further, in the case where the cohesion between the heat-reactive layer 7 and the non-adhesive layer 6 is large, when the heat-reactive layer 7 undergoes thermal contraction, the heat-reactive layer 7 pulls the non-adhesive layer 6. Because the cohesion between the non-adhesive layer 6 and the adhesive agent layer 5 is small, the non-adhesive layer 6 is pulled to be torn by the heat-reactive layer 7 without being hindered by the adhesive agent layer 5, and consequently, the opening 6a is formed. Accordingly, the hole portion 20 that is an opening for exposing the adhesive agent layer 5 can be kept larger compared to that of the prior art. Further, the occurrence of the variation in size of the hole portion 20 that is an opening can be suppressed. Further, as illustrated in FIGS. 2A to 2D, the hole portion 20 in various arbitrary shapes can be formed by varying the shape of the non-adhesive layer 6.

### [Embodiment 2]

An adhesive label 1 according to Embodiment 2 of the present invention is described. Regarding the components similar to those of Embodiment 1 described above, the descriptions thereof are omitted.

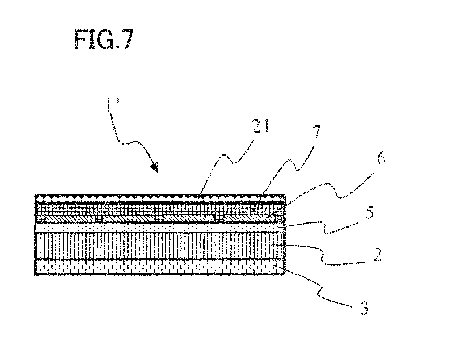

FIG 7 is a schematic structural view of an adhesive label 1' according to Embodiment 2 of the present invention. The adhesive label 1' has the following configuration. That is, an adhesive agent layer 5 made of a pressure-sensitive adhesive agent, a non-adhesive layer 6, a non-adhesive heat-reactive layer (resin film layer) 7 made of an olefin-based resin, and a slide layer 21 made of the same material as that of the non-adhesive layer 6 or a material with a low friction coefficient are laminated in the stated order on one surface of a sheet-shaped support 2 made of paper or the like, and a thermosensitive recording layer 3 on which characters, bar codes, and the like are to be recorded is laminated on the other surface of the support 2. A method of producing an adhesive label and an apparatus for producing an adhesive label of this embodiment are substantially the same as those of Embodiment 1, and hence the descriptions thereof are omitted.

If the heat-reactive layer 7 is allowed to undergo thermal contraction at low temperature so as to reduce energy, in the case of an apparatus for producing an adhesive label that cannot adjust the heating temperature of a thermal head 8, the heat-reactive layer 7 undergoes thermal contraction in a region larger than a desired region by heating with the thermal head 8, and there is a possibility that a problem may occur in stability of transportation, such as the adhering of the resin film to some members in a transport path. Therefore, on the heat-reactive layer 7, the slide layer 21 is provided, which is a thin film made of the same material as that of the non-adhesive layer 6 or a material which starts undergoing thermal contraction at temperature higher than that of the heat-reactive layer 7 and whose friction coefficient is equal to or lower than that of the heat-reactive layer 7. Thus, even in the case of using the heat-reactive layer 7 that starts undergoing thermal contraction at low temperature, the heat-reactive layer 7 can be prevented from undergoing thermal contraction in a region larger than a desired region because the slide layer 21 covers the heat-reactive layer 7. It is preferred that the size of the slide layer 21 be about 1 µm to about 3 µm.

Further, similarly to the adhesive label 1 of Embodiment 1, the adhesive label 1' of this embodiment cannot exhibit adhesiveness in a non-use state (unheated state), and can thus prevent the blocking phenomenon, resulting in good transportability (paper-running property).

### [Method of producing adhesive label]

One surface of the heat-reactive layer 7 with a thickness of about 1 µm to about 10 µm is subjected to surface treatment such as corona discharge treatment, primer treatment, or plasma discharge treatment, and then, coated with the non-adhesive layer 6 using a device utilizing a gravure coating technology, such as a gravure coater, a slot die coater, or a Rising & Rising (R&R) coater. Then, one surface of the support 2 on which the adhesive agent layer 5 made of a pressure-sensitive adhesive agent is provided, and one surface of the heat-reactive layer 7 coated with the non-adhesive layer 6 are attached to each other. Herein, on the other surface of the support 2, the thermosensitive recording layer 3 mainly containing colorless or light-colored leuco dye and a developer is provided. When attachment is performed, care should be taken so that wrinkles and kinks may not occur in each layer and air bubbles, dirt, etc. may not be mixed therein. In the case of producing the adhesive label 1' provided with the slide layer 21, the heat-reactive layer 7 is previously coated with the slide layer 21 or coated therewith finally.

As another production method, one surface of the support 2 on which the adhesive agent layer 5 made of a pressure-sensitive adhesive agent is provided, that is, the adhesive agent layer 5 is coated with the non-adhesive layer 6 with a gravure coater, a slot die coater, a Rising & Rising (R&R) coater, or the like. Herein, on the other surface of the support 2, the thermosensitive recording layer 3 mainly containing colorless or light-colored leuco dye and a developer is provided. Next, the non-adhesive layer 6 is subjected to surface refinement such as primer treatment or plasma surface treatment. When it is desired that the cohesion between the heat-reactive layer 7 and the non-adhesive layer 6 be increased, a high-adhesive agent layer, which is thinner than the non-adhesive layer 6 or the adhesive agent layer 5 and has sufficiently high adhesive strength, is coated or applied onto the non-adhesive layer 6. Then, after the treatment, the heat-reactive layer 7 is coated on, again with a gravure coater, a slot die coater, a Rising & Rising (R&R) coater, or the like. In the case of producing the adhesive label 1' provided with the slide layer 21, the heat-reactive layer 7 is successively coated with the slide layer 21.

Specific examples of the material for each layer used in Embodiments 1 and 2 described above are described below.

The heat-reactive layer 7 is formed of: an olefin-based resin which is utilized as a general-purpose resin in various applications, such as polyethylene (PE), polyvinyl chloride (PVC), or polypropylene (PP); a multilayer polyolefin (PO) film obtained by laminating films of those resins (such as a PE film and a PP film); polystyrene (PS), polyethylene terephthalate (PET), or a hybrid film obtained by laminating a PS film and a PET film; an ethylene-vinyl acetate copolymer (EVA)-based resin; a polyvinyl alcohol (PVA)-based resin; a polylactic acid (PLA)-based resin as a plant-based material; or the like. It is preferred that the melting temperature of the heat-reactive layer 7 be higher than room temperature (temperature at the time of storage or transport of the adhesive label) and be a temperature at which the heat-reactive layer 7 can be melted by heating means such as a general thermal head.

It is preferred that the non-adhesive layer 6 is made of a material with a low friction coefficient, such as a silicon resin or a fluorine resin.

The adhesive agent layer 5 is made of a pressure-sensitive adhesive agent that can be adhesive only by applying a slight pressure at room temperature for a short period of time, without using water, a solvent, heat, or the like. It is preferred that the pressure-sensitive adhesive agent have a cohesion, elasticity, and high adhesiveness, and can be peeled from a hard smooth surface. The adhesive agent layer 5 is generally formed of: a rubber-based pressure-sensitive adhesive such as natural rubber, styrene-butadiene rubber (SBR), or polyisobutylene rubber; an acrylic pressure-sensitive adhesive having a cross-link system including a monomer having a low glass transition point and a cross-linking agent; an acrylic pressure-sensitive adhesive having a non-cross-linked system obtained by copolymerizing a monomer having a low glass transition point and a monomer having a high glass transition point; a silicone-based pressure-sensitive adhesive formed of a silicone having a high cohesion and a silicone resin having a high adhesive strength; or the like. Further, it is preferred that the adhesive agent layer 5 be made of a material having a large difference in heat capacity from the heat-reactive layer 7 and the non-adhesive layer 6.

The foregoing description has been given by way of example only and it will be appreciated by a person skilled in the art that modifications can be made without departing from the scope of the present invention.

## Claims

1. An adhesive label (1, 1'), comprising:
a support (2);
an adhesive agent layer (5) which is made of an adhesive agent, and formed on one surface of the support;
a non-adhesive heat-reactive layer (7) which is positioned above the adhesive agent layer, the non-adhesive heat-reactive layer forming an opening (7a) when heated to a predetermined temperature or higher; and
a non-adhesive layer (6) which is positioned between the non-adhesive heat-reactive layer and the adhesive agent layer, and is movable over the adhesive agent layer.

2. An adhesive label according to claim 1, wherein a cohesion between the non-adhesive heat-reactive layer (7) and the non-adhesive layer (6) is larger than a cohesion between the adhesive agent layer (5) and the non-adhesive layer (6).

3. An adhesive label according to claim 1 or claim 2, wherein the non-adhesive layer (6) comprises a plurality of cells independent of each other, which are arranged in one of a matrix manner and a zigzag manner, the plurality of cells each comprising at least one of a square shape, a circular shape, a diamond shape, or a hexagonal shape.

4. An adhesive label according to claim 3, wherein an area of one of the plurality of cells of the non-adhesive layer arranged in the one of the matrix manner and the zigzag manner ranges from 1 mm² to 100 mm².

5. An adhesive label according to any one of the preceding claims, wherein the non-adhesive layer (6) forms an opening when heated to the predetermined temperature or higher.

6. An adhesive label according to any one of the preceding claims, wherein one of the non-adhesive heat-reactive layer (7) and the non-adhesive layer (6) is subjected to surface treatment for suppressing sliding of the non-adhesive heat-reactive layer on the non-adhesive layer.

7. An adhesive label according to any one of the preceding claims, wherein the non-adhesive layer (6) is made of one of a silicon resin and a fluorine resin.

8. An adhesive label according to any one of the preceding claims, wherein a thickness of the non-adhesive layer (6) ranges from 1 µm to 10 µm.

9. An adhesive label according to any one of the preceding claims, wherein a total area of the non-adhesive layer (6) ranges from 50% to 95% of a surface area of the adhesive label.

10. An adhesive label according to any one of the preceding claims, further comprising a slide layer (21) provided on the non-adhesive heat-reactive layer (7).

11. An adhesive label according to claim 10, wherein the slide layer (21) is made of the same material as a material of the non-adhesive layer.

12. An adhesive label according to claim 10 or claim 11, wherein a thickness of the slide layer (21) ranges from 1 µm to 3 µm.

13. An adhesive label according to any one of the preceding claim, further comprising a thermosensitive recording layer (3) formed on another surface of the support (2).

14. An adhesive label according to any one of the preceding claims, wherein the non-adhesive heat-reactive layer (7) is made of an olefin-based resin.

15. A method of producing an adhesive label (1, 1'), comprising:
subjecting a surface of a non-adhesive heat-reactive layer (7) to surface treatment, the non-adhesive heat-reactive layer forming an opening when heated to a predetermined temperature or higher;
coating the surface of the non-adhesive heat-reactive layer (7) subjected to the surface treatment with the non-adhesive layer (6); and
attaching an adhesive agent layer (5) formed on one surface of a support (2) and the non-adhesive layer (6) on the non-adhesive heat-reactive layer to each other,
wherein the non-adhesive layer (6) is movable on the adhesive agent layer (5).

16. A method of producing an adhesive label according to claim 15, wherein the surface treatment comprises one of primer treatment and plasma surface treatment.

17. A method of producing an adhesive label according to claim 15 or claim 16, comprising coating the non-adhesive heat-reactive layer (7) with the non-adhesive layer (5) by an apparatus using a gravure coating technology.

18. A method of producing an adhesive label (1, 1'), comprising:
coating an adhesive agent layer (5) made of an adhesive agent and formed on one surface of a support (2) with a non-adhesive layer (6) movable on the adhesive agent layer;
at least one of subj ecting a surface of the non-adhesive layer (6) to surface refinement and coating the non-adhesive layer (6) with a high-adhesive agent layer; and
coating the adhesive agent layer (5), the non-adhesive layer and, where provided, the high-adhesive agent layer with a non-adhesive heat-reactive layer (7) that forms an opening when heated to a predetermined temperature or higher in such a manner that the non-adhesive heat-reactive layer (7) covers the adhesive agent layer (5), the non-adhesive layer (6) and, where provided, the high-adhesive agent layer.

19. A method of producing an adhesive label according to claim 18, wherein the non-adhesive layer (6) is subjected to surface refinement by one of primer treatment and plasma surface treatment.
